# EUROPÄISCHE PATENTSCHRIFT

(11) **EP 1 042 661 B1**
(45) Veröffentlichungstag und Bekanntmachung des Hinweises auf die Patenterteilung: **01.03.2006**
(21) Anmeldenummer: 98966612.8
(22) Anmeldetag: 15.12.1998
(51) Int. Cl.: G01N 1/26, G01N 1/16, G21C 17/028, G01N 33/50

(54) **VIELKANALPROBENAHME- UND MESSSYSTEM ZUR AUTOMATISCHEN LANGZEITANALYSE VON FLUIDEN**
MULTICHANNEL SAMPLE-TAKING AND MEASURING SYSTEM FOR AUTOMATIC LONG-TERM ANALYSIS OF FLUIDS
SYSTEME DE MESURE ET DE PRELEVEMENT D'ECHANTILLON A PLUSIEURS CANAUX DESTINE A L'ANALYSE AUTOMATIQUE DE LONGUE DUREE DE FLUIDES

(30) Priorität: 22.12.1997 DE 19758356
(43) Veröffentlichungstag der Anmeldung: 11.10.2000
(73) Patentinhaber: UFZ-UMWELTFORSCHUNGSZENTRUM Leipzig-Halle GmbH, 04318 Leipzig (DE)
(72) Erfinder: LAZIK, Detlef, D-06198 Salzmünde (DE); RIEDEL, Wolfgang, D-04347 Leipzig (DE); MORGENEYER, Burkhard, D-04416 Markkleeberg (DE); KARGUT, Rolf, D-01458 Medingen (DE); SCHNEIDER, Thomas, D-01109 Dresden (DE); SEIFERT, Eckhardt, D-01109 Dresden (DE); SANDER, Michael, D-01465 Liegau-Augustusbad (DE)
(74) Vertreter: Hengelhaupt, Jürgen
(86) Internationale Anmeldenummer: PCT/EP1998/008083
(87) Internationale Veröffentlichungsnummer: WO 1999/032873

(56) Entgegenhaltungen:
- EP-A- 0 420 296
- EP-A- 0 476 674
- DE-A- 4 102 875
- DE-A- 4 411 268
- US-A- 4 414 858
- US-A- 4 865 811
- US-A- 5 032 362

## Beschreibung

Die Erfindung betrifft ein Messsystem zur automatischen Langzeitanalyse von Fluiden und ist anwendbar in der Umweltmesstechnik, insbesondere zum Prozessmonitoring im Gelände oder im Labor. Ein modular erweiterbares automatisch arbeitendes Vielkanalmesssystem führt hierbei an einer wählbaren Anzahl gasförmiger oder flüssiger Proben die zentrale Messung physikalischer, chemischer und biologischer Parameter unter definierten reproduzierbaren Bedingungen durch.

Im Umweltmonitoring werden vielfach Messsysteme mit verteilten Messwertgebern und zentraler Messwertablage eingesetzt. Die wesentlichen Vorzüge solcher Systeme sind die Ortsunabhängigkeit der Sensorik, keine Parameteränderung infolge von Probennahme und Transport durch on-line-Messung und minimale Störung des Feststoff-Fluidsystems.

Dem stehen jedoch unter anderem die Nachteile gegenüber, dass eine Vielzahl von Messstellen mit gerätebedingten, zufälligen und systematischen Fehlern vorhanden ist, unterschiedliche zeitvariante Messbedingungen wie Temperatur, Feuchte, Fluidgeschwindigkeit und Druck der einzelnen Messstellen und der Gerätefehler, also Toleranzen und Drift, der Messfühler und Verstärker die Vergleichbarkeit der Messergebnisse untereinander beschränken.

Weiterhin ist die Kalibrierung der Sensorik nur eingeschränkt möglich, z.B. vor und nach dem Monitoring. Kalibrierfehler, Sensordrift, Kalibrierung und Messung bei unterschiedlichen Messbedingungen beschränken die Messgenauigkeit und Nachvollziehbarkeit.
Die Anfälligkeit von Sensorik, Verstärkern und langen Kabeln gegenüber elektrischen Störfeldern ist relativ hoch.

Die Verfahrensdurchführung ist personalintensiv aufgrund von Betreuung und Kalibrierung aller Messstellen und kostenintensiv aufgrund der vielfachen parallelen Installation gleichartiger Baugruppen und deren Versorgung.

In der US-A-50 32 362 wird ein automatisch arbeitendes Analysegerät zur Analyse von Körperfluiden, wie Blutproben, enthaltend eine Probeneingabeeinrichtung, einen Vorratsraum, eine Messkammer, beschrieben.

Um eine stets gleiche Behandlung der Proben und damit eine Reproduzierbarkeit der Messung zu gewährleisten, wird der Messkanal mittels eines Ventils von einem mit der Probeneingabeeinrichtung verbundenen Vorratsraum abgetrennt. Die Proben werden über Probeneingänge eingegeben, entweder injiziert oder mit einer Schlauchpumpe eingesaugt. Die Probenahmeeingabeeinrichtung enthält eine Andock-Scheibe.

Die Zyklen für die Reinigungszeit, für die Kalibrierzeit und für die Messzeiten sind festgelegt.

In der DE-A-44 11 268 wird eine Analysevorrichtung und ein Analyseverfahren beschrieben, bei denen mehrere Flüssigkeitsproben nacheinander in einen Reaktionskanal einem Detektor zugeleitet und mindestens ein Reagens zur Reaktion mit den Proben in den Reaktionskanal eingeleitet werden. Es gibt nur eine Probeneingabestelle, einen Reaktionskanal mit nacheinanderfolgenden Abschnitten aus Probe und Reagens und einen Durchflussbetrieb.

Aus der EP-A-04 76 674 ist ein Probenahme- und Messsystem bekannt, welches von einer Vielzahl von verteilten Probenahmestellen (Remote Locations) gasförmige Proben oder Kalibriergase entnehmen kann, und diese zu einer zentralen Messeinrichtung (Laboratory) transportiert.

Die Probenahmeventile sind für kontinuierliche Förderung ausgelegt, selbst dann, wenn der entsprechende Kanal nicht zum Analysengerät verbunden ist. Es sind bestimmte Einrichtungen zur Vorbehandlung der Proben bereits an der Probenahmestelle vorgesehen. Daher sind so viele Vorbehandlungseinrichtungen wie Probenahmestellen vorhanden.

In der US-A-44 14 858 wird ein Apparat zur Probenahme von Wasser oder Dampfkondensat in einer Dampfturbine an einer Vielzahl von Kanälen, welche mit verschiedenen Punkten des Systems verbunden sind, und zu einer zentralen Analyseneinheit führen, beschrieben. Das Ventilarrangement und die Analyseneinheit werden von einem Computer kontrolliert. Der Computer hat eine Anzahl gespeicherter Instruktionen, wie z.B. die zufallsgesteuerte Auswahl eines Kanals oder die Unterbrechung der Messreihenfolge beim Auftreten abnormaler Betriebsbedingungen.

Die Ventile für die Auswahl des Probenahmekanals sind für kontinuierlichen Durchfluss vorgesehen, auch wenn der entsprechende Probenkanal nicht zum Analysator durchgeschaltet ist.

Der Erfindung liegt daher die Aufgabe zugrunde, ein Messsystem zur automatischen Langzeitanalyse von Fluiden zu schaffen, bei welchem Einflüsse auf das zu beobachtende System weitgehend minimiert werden, wobei die Verfahrensdurchführung bei geringem materiellen und personellen Aufwand für die Herstellung, die Installation, Betrieb und Wartung der Anordnung vielseitig und variabel möglich sein soll.

Diese Aufgabe wird erfindungsgemäß gelöst durch die Merkmale der Ansprüche 1 und 7.

Zweckmäßige Ausgestaltungen der Erfindung sind in den Unteransprüchen enthalten.

Ein besonderer Vorteil der Erfindung besteht in der Minimierung von personellem und materiellem Aufwand bei gleichzeitiger Maximierung von Messgenauigkeit und Reproduzierbarkeit der Messung, indem
ereignisorientiert über frei wählbare Probenkanäle für mindestens zwei unterschiedliche Probenahmestellen die Messwerte zentral gewonnen werden, ereignisorientiert über ein als Netzwerk für die sequentiell zyklische Auswahl unterschiedlicher Fluide ausgebildetes hydraulisches Interface eine automatische Kalibrierung über Kalibrierkanäle erfolgt
die Proben zurückgeführt oder in einem Fraktionswechsler zur weiteren Analytik gespeichert werden,
ereignisorientiert eine automatische Reinigung von durchströmten fluidführenden Proben- und Kalibrierkanälen sowie der Messzelle mit mehreren Reinigungsmedien vorgenommen wird und
alle Proben sowie zur Kalibrierung und absolute Parameterenmittlung Fluide bekannter Zusammensetzung mit der gleichen Sensorik unter gleichbleibenden Bedingungen analysiert werden.

Die Anordnung zur automatischen Probenahme aus einem Probenahmenetz für die automatische Langzeitanalyse physikalischer, und/oder chemischer und/oder biologischer Parameter von Fluiden, bei der eine automatische Kalibrierung der eingesetzten Sensorik erfolgt und Kalibrierlösungen eingesetzt werden, unter einer Datenerfassungs und -verarbeitungseinrichtung, ist dadurch gekennzeichnet, dass mehrere, mindestens zwei Probenahmestellen über Messkanäle sowie Kalibriereinrichtungen über Kalibrierkanäle eingangsseitig mit mindestens einem als Netzwerk für die Auswahl unterschiedlicher Fluide ausgebildeten und von der Datenerfassungs- und -verarbeitungseinrichtung ereignisorientiert gesteuerten hydraulischen Interface mit Eingängen für Probe-, Kalibrier- und Reinigungsfluide verbunden sind, welches ausgangsseitig mit mindestens einer Messzelle zur Erfassung der Probenparameter unter konstanten Bedingungen mit integrierter Pumpe verbunden ist, und ein Ventilsystem aufweist, bestehend aus Arbeitsventilen, über die die Reinigungsfluide in das hydraulische Interface geführt, Ventile, über die die Messkanäle gesperrt/freigegeben werden, und Arbeitsventilen, über die das Befüllen/Entleeren oder ein Kreislaufbetrieb der

Messzelle erfolgt.

Die Vorteile der Erfindung sind die absolute Parameterermittlung durch automatische Vermessung von Fluiden bekannter Zusammensetzung (Standards) unter gleichbleibenden Bedingungen in vorgebbaren Taktsequenzen bis zum Erreichen der jeweiligen Messwertkonstanz sowie die fortlaufende SoftwareKalibrierung der Messwertgeber für die einzelnen Messgrößen und eine zeitliche Interpolation der Kalibrierung auf den Messzeitpunkt der Probenvermessung, die kontrollierte mehrstufige automatische Reinigung der fluidführenden Systembaugruppen und ein modularer, problemangepasster Aufbau des Gesamtsystems, wobei mindestens ein hydraulisches Interface mit mindestens einer Messzelle gekoppelt wird.

Dadurch, daß mehrere, mindestens zwei Probenahmestellen über Meßkanäle sowie Kalibriereinrichtungen über Kalibrierkanäle eingangsseitig mit mindestens einem hydraulischen Interface verbunden sind, welches ausgangsseitig mit mindestens einer Meßzelle zur Erfassung der Parameter aller Proben unter konstanten Bedingungen verbunden ist, wird eine absolute Vergleichbar keit der ermittelten Meßwerte zwischen den Fluiden unterschiedlicher Meßstellen erreicht.

Die Erfindung soll nachstehend anhand von zumindest teilweise in den Figuren dargestellten Ausführungsbeispielen näher erläutert werden.
Es zeigen:
- Fig. 1: eine Anordnung für Säulenexperimente,
- Fig. 2: eine Anordnung für Batchversuche,
- Fig. 3: eine Anordnung für Lysimeterversuche,
- Fig. 4: eine Anordnung für Bodenluftmessungen,
- Fig. 5: ein Basismodul des hydraulischen Interface,
- Fig. 6: ein Erweiterungsmodul des hydraulischen Interface und
- Fig. 7: ein Meßzellenmodul mit einer Messelektrode.

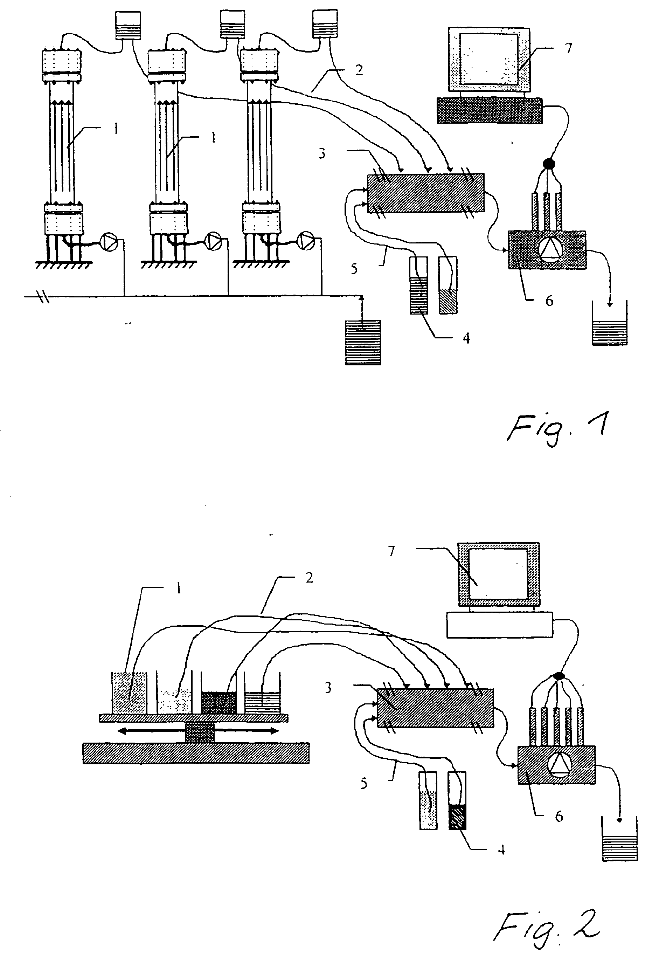

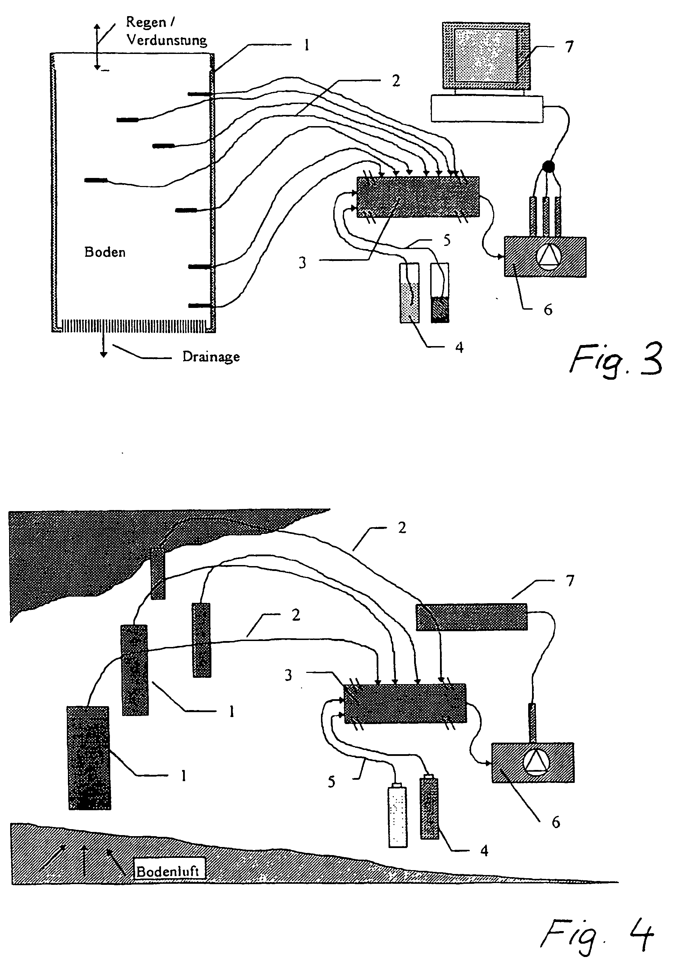

In den Fig. 1 und 3 sind Anwendungsmöglichkeiten des Meßsystems im Labor und in den Fig. 2 und 4 zum Prozeßmonitoring im Gelände dargestellt.
Allen ausgewählten Anwendungsfällen gemeinsam ist die Anordnung eines hydraulischen Interface 3, welches eingangsseitig mit den Probenahmestellen 1 über Meßkanäle 2 sowie Kalibriereinrichtungen 4 über Kalibrierkanäle 5 verbunden ist. Ausgangsseitig ist das hydraulische Interface 3 mit einer Meßzelle 6 verbunden, an welche eine Datenerfassungs/-verarbeitungseinrichtung 7 angeschlossen ist. Die Reinigungseinrichtungen und Reinigungskanäle sind in den Fig. 1 bis 4 nicht dargestellt.

Die Datenerfassungs/-verarbeitungseinrichtung in Fig. 4 ist als auslesbarer Datenlogger ausgebildet, die Kalibriereinrichtung 4 liefert Kalibriergase.
Das hydraulische Interface 3 ist als ein Netzwerk für die sequentiell zyklische Auswahl unterschiedlicher Fluide ausgebildet. Es dient der automatischen Freischaltung verschiedener Meßkanäle 2, welche an die Meßzelle 6 angeschlossen werden können. Die automatische Auswahl der hydraulischen Meßkanäle 2 erfolgt problemangepaßt und kann vom Anwender definiert werden. Das hydraulische Interface 3 hat mehrere Eingänge für Probe-, Kalibrier- und Reinigungsfluide. Die Fluide werden von der Entnahmestelle zu den Eingängen geführt und im vorliegenden Ausführungsbeispiel mit Schnellschluß-Kupplungen verbunden.
Zur Reinigung des hydraulischen Interface 3 und der Meßzelle 6 können wählbare Fluide verwendet werden. Im allgemeinen verwendet man destilliertes Wasser und ein inertes Gas, z.B. Argon. Entscheidend ist, daß ein Grenzdruck nicht überschritten werden darf. Innerhalb des möglichen Druckbereiches werden die Reinigungsfluide zur Erhöhung der Reinigungsleistung gepulst. Als Option zum Fluidabfluß der Meßzelle 6 ist eine Fluidrückführung vorgesehen. Dabei werden durch die inverse Schaltung des hydraulischen Interface 3 und der Schlauchpumpe 8 Proben- oder Kalibrierfluide zur Entnahmestelle zurückgepumpt.

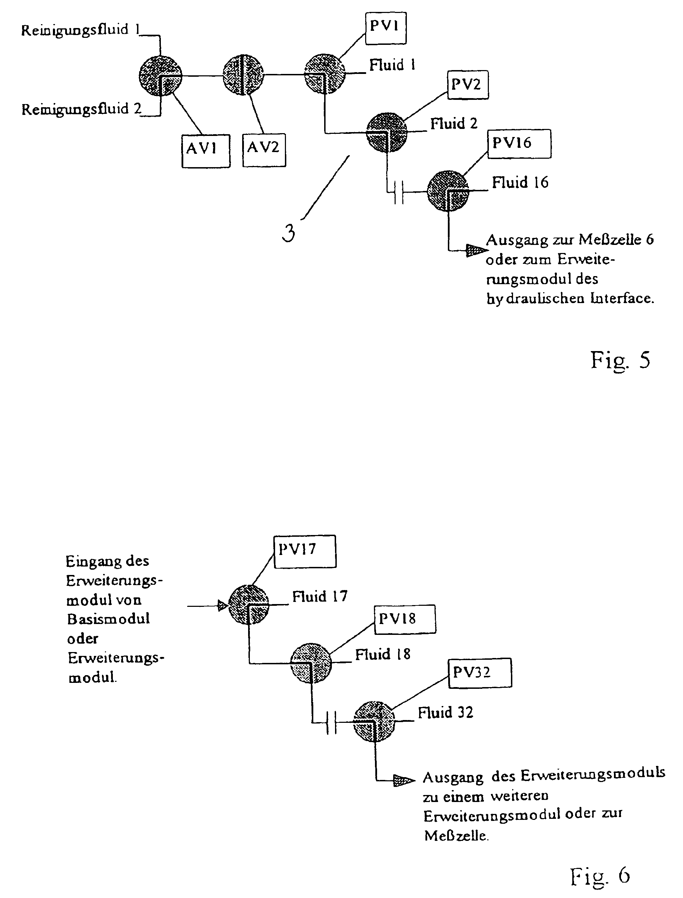

In Fig. 5 ist ein hydraulisches Interface 3 mit zwei Reinigungskanälen und 16 Meß-/Kalibrierkanälen (Fluid 1 bis Fluid 16) dargestellt. Die Reinigungsfluide werden durch die Arbeitsventile AV1 und AV2 in das hydraulische Interface 3 geführt. AV1 dient der Selektion des Reinigungsfluids. AV2 kann den Reinigungsfluidstrang sperren oder freigeben. Die Meß-/Kalibrier-Ventile PV1 bis PV16 bilden das hydraulische Netzwerk. Sie sorgen für die selektive Freischaltung eines Meß-/Kalibrierkanals. In Fig. 5 ist der Meß-/Kalibrierkanal 16 durch das Ventil PV16 freigeschaltet. Das Meß-/Kalibrierfluid wird so zur Meßzelle 6 gesaugt. Die Fluide treten am Ausgang des Moduls aus.
Hier kann entweder ein Erweiterungsmodul des hydraulischen Interface oder das Basismodul der Meßzelle 6 angeschlossen werden.

Das Erweiterungsmodul stellt eine modulare Erweiterung des hydraulischen Netzwerks dar. Mit diesem Modul wird das Basismodul um weitere Meßkanäle 2 ergänzt. Das Erweiterungsmodul besitzt dieselben Eigenschaften wie das Basismodul. Theoretisch ist eine beliebige Erweiterbarkeit denkbar. Das in Fig. 6 dargestellte Erweiterungsmodul verfügt über sechzehn Meßkanäle, wobei Meßkanal 17 freigeschaltet ist.

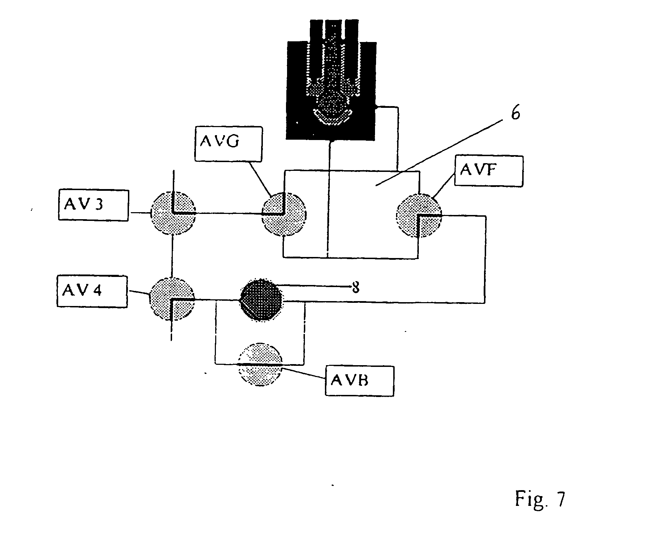

Ein Meßzellenmodul ist in Fig. 7 dargestellt und besteht aus der Meßzelle 6, der integrierten steuerbaren Schlauchpumpe 8 und einem Ventilsystem. Die Schlauchpumpe 8 dient dem Ansaugen und Bewegen der Fluide. Die Ventile haben die Aufgabe, den Kreislauf der Meßzelle 6 zum Befüllen/Entleeren oder zum Kreislaufbetrieb zu schalten. In der Meßzelle 6 befinden sich die Sensoren. Die Meßzelle 6 ist modular erweiterbar.

Die Wirkungsweise der Meßzelle ist wie folgt:
Das Fluid wird über das Arbeitsventil AV3 und AVG in die Meßzelle 6 gesaugt. Es fließt weiter durch AVF und tritt durch Arbeitsventil AV4 aus. Dort kann es in einem Sammelbehälter oder in einem Fraktionensammler aufgefangen werden. Die Ventile AV3, AV4, AVG und AVF wechseln zwischen zwei Modi der Meßzelle 6 - dem Befüll-/Entleermodus und dem Kreislaufmodus. AVB ist das Bypassventil der integrierten steuerbaren Schlauchpumpe 8.

Im Befüllmodus wird die Meßzelle 6 mit Kalibrier-, Meß-oder Reinigungslösung befüllt. Das Fluid tritt am Ausgang aus. Die Ventile AVG und AVF selektieren dabei den Eingang und den Ausgang.
Im Entleermodus wird das Meß-, Kalibrier- oder Reinigungsfluid aus der Meßzelle 6 ausgeblasen. Dies geschieht mit Inertgas unter einem Druck von bis zu 2 bar. Das Arbeitsventil AVB (Bypass) dient dem Kurzschließen der Schlauchpumpe 8 während des Freiblasens. Der steuerbare Bypass soll den Strömungswiderstand der Schlauchpumpe. 8 aufheben, um damit ein effektiveres Durchblasen der Meßzelle 6 und des hydraulischen Interface 3 zu erreichen. Am Boden der Meßzelle 6 sammeln sich Fluidtröpfchen und können am unteren Ausgang ausgeblasen werden.

Im Kreislaufbetrieb wird das Meß-, Kalibrier- oder Reinigungsfluid durch die Meßzelle 6 geleitet. Dabei werden entweder Meß- oder Kalibrierfluide vermessen oder die Meßzelle 6 mit Reinigungsfluiden gesäubert.
Die Schlauchpumpe 8 kann in Drehzahl und Drehrichtung gesteuert werden und erhöht so die Durchmischung in der Meßzelle 6. Für die Reinigung der Meßzelle 6 und den Meßvorgang ist dies von Bedeutung.

Beim Ausblasen von Fluidresten aus dem durchströmten Volumen der Anlage wird Inertgas mit einem Druck von bis zu 2 bar eingesetzt. Die Schlauchpumpe 8, die dabei als Strömungshindernis wirken würde, muß mit einem Bypass umgangen werden. Dazu wird ein Überdruckventil eingesetzt, das sich bei einem bestimmten einstellbaren Grenzdruck öffnet.

Nachstehend soll die Funktionsweise beschrieben werden. Die Steuerung des Gerätes erfolgt taktgebunden. Im vorliegenden Ausführungsbeispiel für eine Laborsäulenanlage existieren 10 diskrete Arbeitstakte.

Für zwei Reinigungsfluide (destilliertes Wasser und Stickstoff) kann das zehntaktige Arbeitsschema folgendermaßen beschrieben werden.

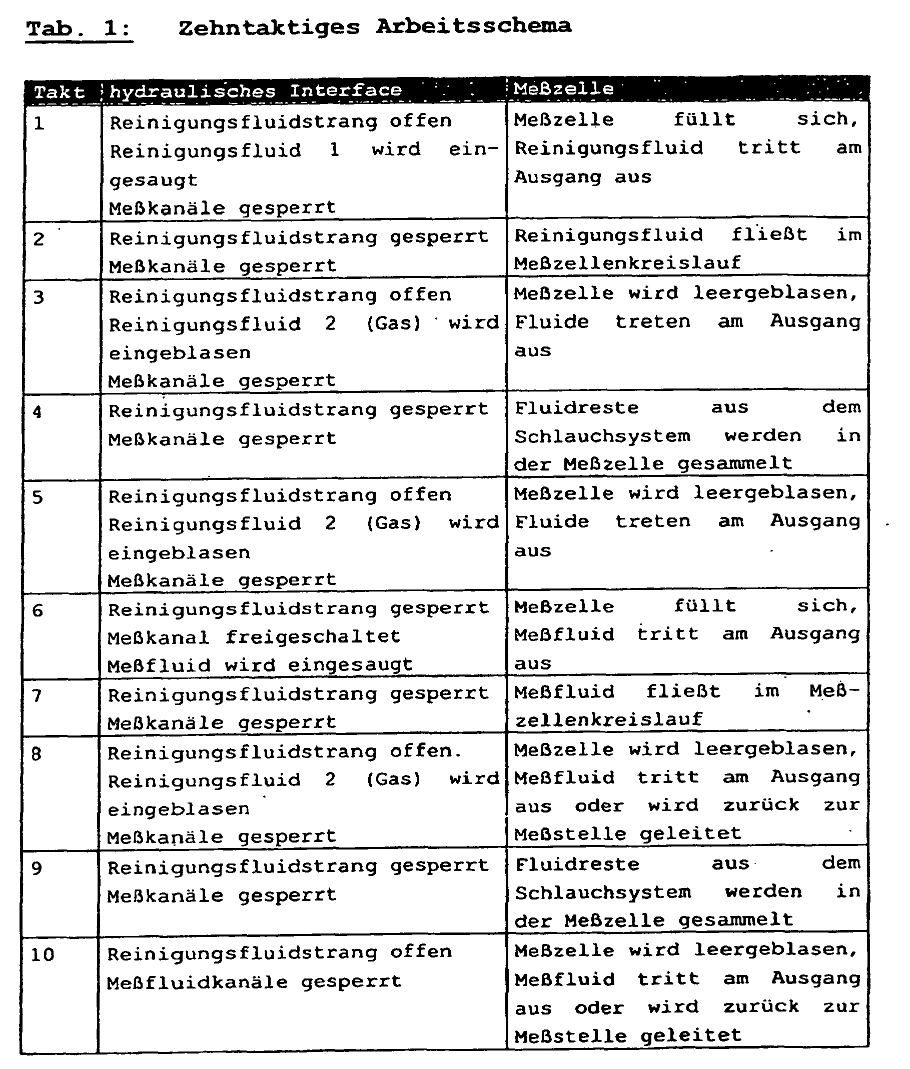

Ist das Arbeitsschema beendet, so beginnt Takt 1 aufs neue, wobei der Meß-/Kalibrierkanal sequentiell weitergeschaltet wird.

Bei der ereignisorientierten Steuerung der Taktzeit wird diese in Abhängigkeit von Beschaffenheitsparametern des Meß-, Kalibrier- oder Reinigungsfluid geregelt. So kann die Dauer eines Taktes von einer definierbaren Parametergruppe (z.B. Leitfähigkeit, pH-Wert usw.) bestimmt werden. Die selektierten Parameter werden dann während des Taktes überwacht. Erst wenn die Parameter gegen jeweilige Grenzwerte konvergieren bzw. stabil bleiben, wird in den folgenden Takt umgeschaltet.

Zur ereignisorientierten Steuerung der Taktzeiten zählt auch die Ansteuerung von Taktzyklen. Dabei wird eine Taktschleife durchlaufen die aus mehreren aufeinanderfolgenden Takten besteht. Anwendung findet dieses Prinzip bei der Reinigung der Meßzelle 6, der Kalibrierung und der Vermessung des Meßfluids.
Bei der Reinigung der Meßzelle 6 sowie der des gesamten fluidführenden Stranges, beginnend im hydraulischen Interface, wird durch die Bildung einer Taktschleife aus den Takten 1 bis 5 des Arbeitsschemas eine mehrstufige Reinigung der fluidführenden Baugruppen erreicht.
Der Erhöhung der Reinigungsleistung dient eine aperiodisch gepulste Fluidstromsteuerung. Bei der Vermessung des Meß-/Kalibrierfluids wird durch eine Schleife der Takte 5 bis 10 und durch Verwerfung einer oder mehrerer Meß-/Kalibrierfluide eine Spülung der Meßzelle 6 mit Meß-/Kalibrierfluid erreicht. Dadurch werden Meßfehler vermieden.

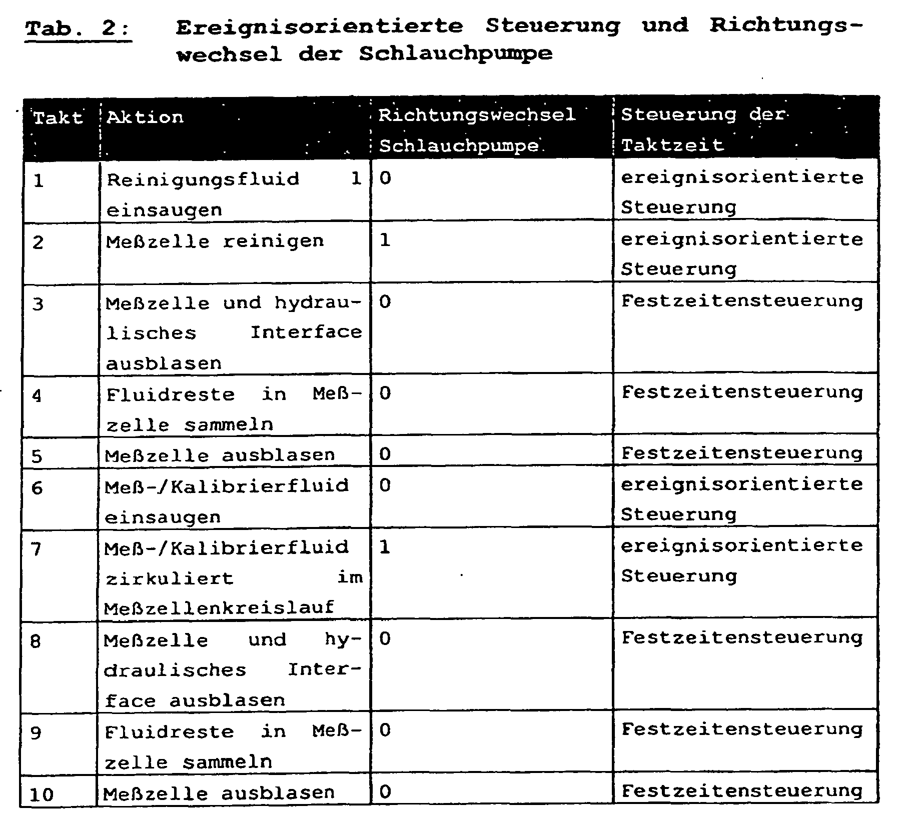

Beim Kalibrieren wird eine bekannte Meßgröße, beispielsweise einer Kalibrierlösung, an den Sensor angelegt und das entsprechende Antwortsignal gemessen. Auf diese Weise wird eine mitlaufende Kalibrierkurve des Sensors aufgezeichnet.

Die Softwarekalibrierung erfolgt fortlaufend in einem definierbaren Verhältnis zu den regulären Probevermessungen. Bei jedem Kalibriervorgang wird für den entsprechenden Sensor eine Kennlinie aufgenommen oder ein Punkt auf dieser geprüft. Die Kennlinie wird von der spezifischen Software gespeichert und dient zur absoluten Interpretation der Meßergebnisse. Durch die Software erfolgt weiterhin die zeitliche Interpolation der Kalibrierung auf den Meßzeitpunkt der Probevermessung.

Der Messung geht die Probenahme voraus. Diese findet in Takt 6 statt. Die Meßzelle 6 wird hierbei gefüllt und der Meßzellenkreis wird mit Meßfluid gespült. Durch die ereignisorientierte Steuerung wird geprüft, ob der Meßwert konvergiert oder konstant bleibt.
Ist dies der Fall, so wird in Takt 7 umgeschaltet und der Datenlogger speichert die erfaßten Meßwerte ab.
Weist der Meßwert aber nicht die erwartete Konstanz auf, wird die Probe verworfen. Die Meßzelle 6 wird daraufhin in Takt 8,9 und 10 ausgeblasen. Um erneut Meßfluid vom bereits selektierten Meßkanal anzusaugen, wird in Takt 6 umgeschaltet.

## Patentansprüche

1. Verfahren zur automatischen Probenahme aus einem Probenahmenett für die automatische Langzeitanalyse physikalischer und/oder chemischer und/oder biologischer Parameter von Fluiden, bei der eine automatische Kalibrierung der eingesetzten Sensorik erfolgt und Kalibrierlösungen eingesetzt werden,
wobei ereignisorientiert über frei wählbare Probenkanäle für mindestens zwei unterschiedliche Probenahmestellen die Messwerte zentral gewonnen werden,
ereignisorientiert über ein als Netzwerk für die sequentiell zyklische Auswahl unterschiedlicher Fluide ausgebildetes hydraulisches Interface eine automatische Kalibrierung über Kalibrierkanäle erfolgt
die Proben zurückgeführt oder in einem Fraktionswechsler zur weiteren Analytik gespeichert werden,
ereignisorientiert eine automatische Reinigung von durchströmten fluidführenden Proben- und Kalibrierkanälen sowie der Messzelle mit mehreren Reinigungsmedien vorgenommen wird und alle Proben sowie zur Kalibrierung und abosolute Paramerenmittlung Fluide bekannter Zusammensetzung mit der gleichen Sensorik unter gleichbleibenden Bedingungen analysiert werden.

2. Verfahren nach Anspruch 1,
**dadurch gekennzeichnet, dass**
die Anzahl der Probenahmestellen und damit die Anzahl der Messkanäle wählbar und einstellbar ist.

3. Verfahren nach Anspruch 1 oder 2,
**dadurch gekennzeichnet, dass**
die Fluide rückführbar aus den Probenahmestellen und/oder kreislaufgeführt durch die Sensorik geleitet werden.

4. Verfahren nach mindestens einem der voranstehenden Ansprüche,
**dadurch gekennzeichnet, dass**
die Messwertgewinnung in vorgebbaren Taktzeiten erfolgt.

5. Verfahren nach mindestens einem der voranstehenden Ansprüche,
**dadurch gekennzeichnet, dass**
die Messwertgewinnung bis zum Erreichen der jeweiligen Messwertkonstanz erfolgt oder die Extrapolation der Messwert-Zeit-Reihe asymptotisch gegen einen ermittelten Grenzwert läuft.

6. Anordnung zur automatischen Probenahme aus einem Probenahmenetz für die automatische Langzeitanalyse physikalischer und/oder chemischer und/oder biologischer Parameter von Fluiden, bei der eine automatische Kalibrierung der eingesetzten Sensorik mittels einer Datenerfassungs- und -verarbeitungseinrichtung erfolgt und Kalibrierlösungen eingesetzt werden,
wobei mehrere, mindestens zwei Probenahmestellen (1) über Messkanäle (2) sowie Kalibriereinrichtungen (4) über Kalibrierkanäle (5) eingangsseitig mit mindestens einem als Netzwerk für die sequentiell zyklische Auswahl unterschiedlicher Fluide ausgebildeten und von der Datenerfassungs- und -verarbeitungseinrichtung ereignisorientiert gesteuerten hydraulischen Interface (3) an dessen Eingängen für Probe-, Kalibrier- und Reinigungsfluide verbunden sind, welches ausgangsseitig mit mindestens einer Messzelle (6) zur Erfassung der Probenparameter unter konstanten Bedingungen mit integrierter Pumpe (8) verbunden ist, und ein Ventilsystem aufweist, bestehend aus Arbeitsventilen (AV1, AV2), über die die Reinigungsfluide in das hydraulische Interface (3) geführt, Ventilen (PV1...PV16), über die die Messkanäle (2) gesperrt/freigegeben werden, und Arbeitsventilen (AV3, AV4, AVG, AVF), über die das Befüllen/Entleeren oder ein Kreislaufbetrieb der Messzelle (6) erfolgt.

7. Anordnung nach Anspruch 6,
**dadurch gekennzeichnet, dass**
die Messzelle (6) mit der Datenerfassungs- und -verarbeitungseinrichtung (7) verbunden ist.

8. Anordnung nach Anspruch 6 oder 7,
**dadurch gekennzeichnet, dass**
das hydraulische Interface (3) eingangsseitig mit Reinigungseinrichtungen über Reinigungskanäle verbunden ist.

## Claims

1. A method of automatic sampling from a sampling network for the automatic long-term analysis of physical and/or chemical and/or biological parameters of fluids wherein automatic calibration of the employed sensor system is effected and calibration solutions are used,
in which method the measured values are obtained centrally in an event-oriented fashion via freely selectable sample channels for at least two different sampling points,
automatic calibration is effected via calibration channels in an event-oriented fashion by means of a hydraulic interface designed in the form of a network for the sequentially cyclic selection of different fluids,
the samples are returned or stored in a fraction changer for further analytic measures,
automatic cleaning of fluid-conducting sample and calibration channels where flow passes through and of the measuring cell is effected using several cleaning media,
all samples and, for the purpose of calibration and absolute parameter determination, fluids of known composition are analyzed using the same sensor system under constant conditions.

2. The method according to claim 1,
**characterized in that**
the number of sampling points and, as a consequence, the number of measuring channels can be selected and adjusted.

3. The method according to claim 1 or 2,
**characterized in that**
the fluids are returnably conducted from the sampling points and/or circulated through the sensor system.

4. The method according to at least one of the preceding claims,
**characterized in that**
the measured values are obtained at pre-determinable cycle times.

5. The method according to at least one of the preceding claims,
**characterized in that**
the measured values are obtained until each measured value reaches constancy or an extrapolation of the measured value-time series asymptotically approaches an established limit.

6. An array for automatic sampling from a sampling network for the automatic long-term analysis of physical and/or chemical and/or biological parameters of fluids wherein automatic calibration of the employed sensor system is effected using a data collection and processing means and calibration solutions are used,
which array has multiple, at least two sampling points (1) via measuring channels (2) and calibration means (4) via calibration channels (5) connected at the inlet with at least one hydraulic interface (3) at its inlets for sample, calibration and cleaning fluids, which interface is designed in the form of a network for the sequentially cyclic selection of different fluids and controlled by said data collection and processing means in an event-oriented fashion, and which at its outlet is connected with at least one measuring cell (6) for the detection of the sample parameters under constant conditions, with integrated pump (8), and which has a valve system consisting of operating valves (AV1, AV2) through which the cleaning fluids are passed into the hydraulic interface (3), valves (PV1...PV16) by means of which the measuring channels (2) are locked/released, and operating valves (AV3, AV4, AVG, AVF) by means of which filling/emptying or circulating operation of the measuring cell (6) is effected.

7. The array according to claim 6,
**characterized in that**
the measuring cell (6) is connected with said data collection and processing means (7).

8. The array according to claim 6 or 7,
**characterized in that**
the hydraulic interface (3) at the inlet thereof is connected with cleaning means via cleaning channels.

## Revendications

1. Procédé de prélèvement d'échantillon automatique à partir d'un réseau de prélèvement d'échantillons destiné à l'analyse automatique de longue durée de paramètres physiques et/ou chimiques et/ou biologiques de fluides, dans laquelle un étalonnage automatique de la technologie de capteur utilisée est effectué et on utilise des solutions d'étalonnage,
dans lequel les valeurs de mesure sont obtenues de manière centralisée, en un mode orienté événement, par l'intermédiaire de canaux de prélèvement librement choisis pour au moins deux points de prélèvement d'échantillon différents,
un étalonnage automatique est effectué par des canaux d'étalonnage dans un mode orienté événement par l'intermédiaire d'une interface hydraulique construite sous forme d'un réseau servant à une sélection cyclique séquentielle de différents fluides,
les échantillons sont renvoyés ou sont stockés dans un inverseur de fraction en vue d'une analyse ultérieure,
en mode orienté événement, un nettoyage automatique des canaux d'étalonnage et d'échantillons amenant les fluides ainsi que de la cellule de mesure est réalisé avec plusieurs milieux de nettoyage et
tous les échantillons ainsi que tous les fluides de composition connue utilisés pour l'étalonnage et la détection absolue des paramètres sont analysés avec la même technologie de capteur dans des conditions restant constantes.

2. Procédé selon la revendication 1,
**caractérisé en ce que**
le nombre des points de prélèvement d'échantillon et donc le nombre des canaux de mesure est sélectionnable et réglable.

3. Procédé selon la revendication 1 ou 2,
**caractérisé en ce que**
les fluides sont conduits de manière récupérable à partir des points de prélèvement d'échantillon et/ou conduits en circuit fermé au travers des capteurs.

4. Procédé selon au moins l'une des revendications précédentes,
**caractérisé en ce que**
l'obtention des valeurs mesurées s'effectue en des temps de cycle prédéterminables.

5. Procédé selon au moins l'une des revendications précédentes,
**caractérisé en ce que**
l'obtention de la valeur mesurée s'effectue jusqu'à ce qu'on atteigne une constance des valeurs mesurées ou l'extrapolation de la progression valeur mesurée/temps se déroule d'une manière asymptotique vis à vis d'une valeur limite déterminée.

6. Dispositif de prélèvement d'échantillon automatique, à partir d'un réseau de prélèvement d'échantillons, destiné à l'analyse automatique de longue durée de paramètres physiques et/ou chimiques et/ou biologiques de fluides, dans laquelle un étalonnage automatique de la technologie de capteur utilisée est effectué au moyen d'un appareillage d'enregistrement et de traitement des données, et on utilise des solutions d'étalonnage,
dans lequel plusieurs, au moins deux points de prélèvement d'échantillon (1), par l'intermédiaire de canaux de mesure, (2) ainsi que des dispositifs d'étalonnage (4), par l'intermédiaire de canaux d'étalonnage (5), sont connectés du côté de l'entrée à au moins une interface hydraulique (3) construite sous forme d'un réseau servant à une sélection cyclique séquentielle des différents fluides et commandée en mode orienté événement par un dispositif d'enregistrement et de traitement des données, à laquelle des entrées pour les fluides d'échantillon, d'étalonnage et de nettoyage sont connectées, cette interface étant connectée elle-même du côté de la sortie à au moins une cellule de mesure (6) destinée à enregistrer les paramètres des échantillons dans des conditions constantes, dotée d'une pompe intégrée (8), et qui comporte un système de robinets, constitué des robinets de service (AV1, AV2), via lesquels les fluides de nettoyage sont guidés dans l'interface hydraulique (3), des robinets (PV1.. PV16) par l'intermédiaire desquels les canaux de mesure (2) sont bloqués/libérés, et des robinets de service (AV3, AV4, AVG, AVF), par l'intermédiaire desquels le remplissage/vidange de la cellule de mesure (6) ou un fonctionnement en circuit fermé s'effectue.

7. Dispositif selon la revendication 6,
**caractérisé en ce que**
la cellule de mesure (6) est connectée à l'appareillage d'enregistrement et de traitement des données (7).

8. Dispositif selon la revendication 6 ou 7,
**caractérisé en ce que**
l'interface hydraulique (3) est connectée du côté de l'entrée à des dispositifs de nettoyage par l'intermédiaire de canaux de nettoyage.
